# EUROPEAN PATENT APPLICATION

(11) **EP 3 672 358 A1**
(43) Date of publication of application: **24.06.2020**
(21) Application number: 18382949.8
(22) Date of filing: 20.12.2018
(51) Int. Cl.: H04W 88/04, H04W 4/06

(54) **METHOD OF COMMUNICATION THROUGH BLE PROTOCOL IN BROADCAST AND FILTERED BY MAC**

(71) Applicant: Baintex Technologies, S.L., 46980 Paterna (Valencia) (ES)
(72) Inventor: Esteve Esteve, José Miguel, 46980 Paterna (ES); Escriche Izquierdo, Carlos, 46980 Paterna (ES); Sendra Estrella, Alberto, 46980 Paterna (ES)
(74) Representative: Sahuquillo Huerta, Jesús

(57) **Abstract**

A method of communication by means of a BLE protocol broadcasted and filtered by MAC on a network under the BLE protocol with at least one broadcast node in broadcast mode and at least one receiver node in observer mode and which is characterised because the broadcast node in broadcast mode broadcasts at least one data packet that includes at least one MAC address of at least one receiver node; and where the receiver node in an advertising channel scans that data packet broadcasts and processes it, if and only if, the data packet received contains its own MAC address.

## Description

The purpose of this invention is a method of communication via BLE (BLUETOOTH LOW ENERGY) broadcast and filtered by MAC (acronym for Media Access Control) that solves the issue of loss of messages and of information when there are multiple devices communicating with each other.

### PRIOR ART

The BLUETOOTH LOW ENERGY Protocol (hereinafter simply BLE) is the main feature of version 4.0 of the BT spec core (Bluetooth). This version was introduced in June 2010 by the Bluetooth special interest group (SIG). Despite being based on BT Classic, the BLE protocol is a wireless technology designed to cover purposes not covered by its predecessor. The main purpose of this protocol is to design a radio standard with the least possible energy consumption, especially optimized to have a low cost, with low bandwidth, low power and equally low complexity.

The BLE protocol facilitates short-range communications between devices that do not require large data transfers, with the main idea of providing an efficient technology for monitoring and controlling applications where the amounts of data are typically very low, such as sending sensor values or control messages.

The BLE network topology is star-type. Master devices can have multiple link-layer connections with peripherals (slave devices) and simultaneously perform searches for other devices. On the other hand, a slave role device can only have one link-layer connection with a single master. In addition, a device can send data in broadcast mode, advertising events, without waiting for any connection. This allows you to send data to the devices in scanning state without having to establish the master-slave connection.

For the device management, connection and application interface BT's SIG defines a stack of protocols. The BLE protocol stack is divided into three basic parts: Controller, Host and Applications. The controller is the physical device that allows one to transmit and receive radio signals and to interpret them as data packets. It contains the physical layer, the Direct Test Mode, the Link Layer and the Host Controller Interface.

The host is the software stack that manages while two or more devices communicate with each other. No superior interface is defined for the host; each operating system or environment has its own way of exposing host APIs (Application Programming Interface) for developers. This part of the stack contains a layer of logical link control and adaptation protocol, security manager, attribute protocol, generic attribute profile (GATT) and generic access profile (GAP). For each use case, applications use the software stack, which in turn uses the driver.

Bluetooth Low Energy shares some similarities with classic Bluetooth. Both use a 2.4 GHz band. Classic Bluetooth and BLE use the GFSK to 1Mbps modulation, but with different modulation indices. Enhanced Data Rate (EDR) uses a completely different modulation from GFSK. The classic Bluetooth standard has 79 channels while BLE has 40, as indicated in table 1.1. The separation between channels is also different. Because of these two differences between BLE and classic Bluetooth, they are incompatible with each other, so they cannot communicate. However, there are Dual Mode devices that support both technologies by switching the modulation parameters and channels where they are radiating.

These three Advertising channels are strategically located to avoid interference caused by other technologies that coexist in the same spectrum (IEEE 802 and ZigBee). In addition, in connection state, BLE uses the Frequency Hopping Spread Spectrum (FHSS) technique to reduce interference.

BLE uses a Gaussian modulation with frequency displacement. This uses two frequencies to identify the '1' or '0' bit. The Gaussian filter is used to soften transitions between frequencies and to reduce the widening spectrum caused by the ISI. The BLE specification [3] limits the maximum transmitted power to +10 dBm and the minimum to -20 dBm. The minimum received sensitivity required for BLE is -70 dBm, although most BLE devices have a sensitivity of less than -85 dBm.

The link layer is the layer responsible for the states of Advertising, Scanning and creating and maintaining connections. It is also responsible for the structure of the packets. The BLE protocol defines a series of operating modes. So, in the Standby mode the device neither transmits nor receives. In general, this state is associated with a sleeper system to conserve energy.

In advertising mode, the device that has the peripheral role enters into a state of advertising in which it sends advertising packets in the advertising channels. In this state it also hears any response (request) of the packets from the central device. This mode is one of the most critical to analyse from a power point of view because the peripheral device will take an Advertising time more or less, depending on the application. It's necessary to consider that the transmission time affects energy consumption; therefore, the Advertising range directly affects the power consumption and the life of the batteries.

The Scanning mode refers to listening to Advertising packets sent through its channels. This mode is used to explore devices. In initiating mode, it is the state that the central device enters (master) before switching to connection status. The central device listens to the peripherals Advertising, but once it receives the Advertising of the desired peripheral, the central device must connect by sending the correct data. For the Slave, the state of Advertising also as initial state before the connection state. The connection state is the last state in which the Slave (peripheral) and master (Central) can exchange data. They exchange data periodically through connection events.

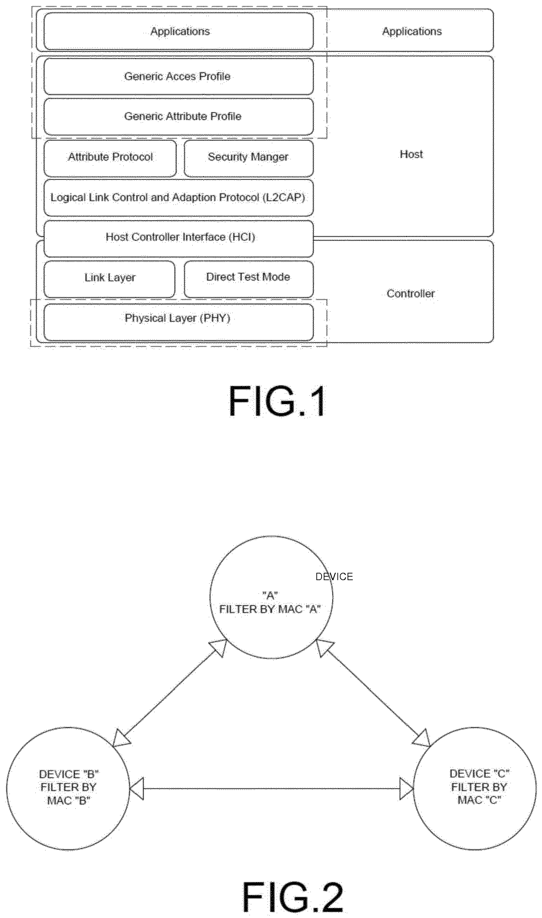

So far, the main elements that make up the BLE protocol have been described in a schematic way and are also shown in figure 1. In the state of the art there are examples of documents that describe some aspects of the BLE protocol, for example, documents US2018176776, US2018091932, US2017325161, or EP2999297

According to the existing technology on the market, with all BLE communication through advertisement, the sending device sends a broadcast packet that a receiving device receives. To optimise the receipt, MAC filtering is applied and, in this way, if the medium is very saturated, it maximises the receipt of packets. However, there is a filtering limitation that only allows five MACs to be added. That is, if filtering is applied, only five devices can be controlled, whereas if it is not applied, in saturated environments, many packets will be lost.

### BRIEF DESCRIPTION OF THE INVENTION

The purpose of this present invention is a method of communication using broadcast BLE that minimises the loss of packets in environments saturated with Bluetooth signals and allows unlimited control of devices, as well as the increase of the maximum distance between devices that exceed 100 meters. This purpose is achieved with the claim method 1. In other claims dependent on it, particular and/or preferred realisations of the invention are shown.

Thus, the method of this invention creates *peer to peer* communication Between two devices of the BLE network using the BLE method of communication through advertising. To do this, each device on the network filters its own MAC address. Thus, the devices send the packets with the receiver's MAC and, therefore, each node on the network supports only the messages that include their MAC address, since, as indicated, the received packets include their own MAC address. In this way we can minimise the loss of packets -as they are directed to the receiver- and control a number of unlimited devices, as well as increase the maximum distance between devices, since the non-receiving nodes act as *repeaters* of the messages from non-recipients.

Throughout the description and claims the word "comprises" and its variants are not intended to exclude other technical characteristics, additives, components or steps. For experts in the field, other purposes, advantages and features of the invention will be gathered partly from the description and partly from practicing the invention. The following examples and drawings are provided as an illustration, and it is not intended to restrict this invention. In addition, this invention covers all possible combinations of particular and preferred realisations indicated herein.

### BRIEF DESCRIPTION OF THE FIGURES

Below a series of drawings are briefly described that help to better understand the invention and are explicitly related to a realisation of this invention that is presented as a non-limiting example thereof.
FIG. 1 shows a diagram of the functional layers of the BLE protocol that is implemented in the broadcast BLE method of communication and filtered by MAC, object of this invention.
FIG. 2 shows a diagram of a broadcast topology that is implemented in the BLE broadcast communication method and filtered by MAC, object of this invention.
FIG. 3 shows a diagram of a packet exchange in a broadcast topology that is implemented in the BLE broadcast method of communication and filtered by MAC, object of this invention.

### DETAILED EXPLANATION OF ONE MODE OF REALISATION OF THE INVENTION

As can be seen in FIG. 1, the generic access profile (GAP) defines how the devices interact with each other. This is at the top level of the BLE stack, because it specifies the roles of the device, modalities, and procedures for the discovery of devices and services, managing the establishment of the connection and security. The GAP defines four roles for the devices: broadcaster, observer, peripheral and central. Based on these roles you can have two possible scenarios.

The first scenario, in which the devices -nodes- do not connect is called broadcasting, where each node is always in "broadcast" mode or "observer" mode. In the second scenario, the devices -nodes- create a connection and establish a bidirectional transfer of data (connection mode). However, the purpose of this invention is related to broadcast mode.

Figure 2 shows an example with three devices -nodes- in broadcast mode, in such a way that at least one node will be a broadcaster and the other nodes will be observers that will be the devices that use the data broadcasted by the broadcasting node, but without communicating with it, so it is a one-to-many communication; i.e. any that is listening.

As previously indicated, in highly saturated environments of BLE devices, for example in home automation applications where each node is a controller of a establish a mechanism to ensure that the message is received in the recipient node. In the current state of the art, MAC filtering is used by establishing a whitelist of allowed MAC addresses that logically limit the possible number of devices -nodes- connected.

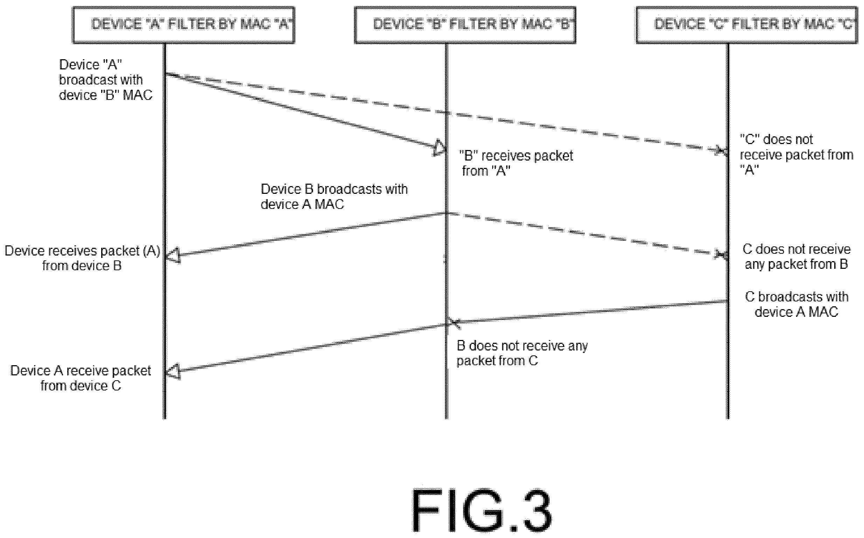

This invention discards the use of whitelists of acceptable MAC devices and implements a filter with the MAC address itself. Thus, each of the nodes (A, B or C) of the network shown in figure 2 only accepts, exclusively and in a limited sense, the packets that their own MAC address identifies. In figure 3 It is possible to observe this data exchange in greater detail.

Thus, as an example, the device -node- broadcasts in broadcast advertising packets they include, not its own Mac, but also the MAC address of the recipient, i.e. the MAC address of the device - node- B, which after scanning the advertising channels in its range, receives it and processes it. Conversely, in certain claims, the device -node-B reaches the role of broadcaster, repeating the process of sending a data packet with the MAC of the device -node- A, so that device A, by filtering the scanned packets, only receives and processes, exclusively, those packets that incorporate their own MAC address.

When a device -node- C sends a packet to Node A, with the MAC address of node A and this packet passes through the scan action radius of node B; the latter rejects the packet, not interfering with the communication between nodes A and C.

Finally, it should be noted that the standard packet contains a payload of 31 bytes that are used, not only to include the recipient's MAC, but also include data that describe the broadcaster and its capacity, in addition to any other custom information to be transmitted to other nodes. Additionally, the BLE protocol supports an optional secondary payload, called "scan-response" that allows observers who detect a broadcast to request a second frame with an additional payload of 31 bytes, for a maximum of 62 bytes in total.

## Claims

1. Communication method using broadcast BLE protocol and MAC filtering on a network under the BLE protocol with at least one broadcaster node in broadcast mode and at least one receiver node in observer mode and which is characterised because the broadcast node in broadcast mode broadcasts at least one data packet that includes at least one MAC address of at least one receiver node; and where the receiver node in an advertising channel scans that data packet broadcast and processes it, if and only if, the data packet received contains its own MAC address.

2. The claim 1 method where, if a receiving node receives a data packet on an advertising channel with a MAC address other than its own, it repeats the data packet to other receiving nodes within its range.
